(19) Europäisches Patentamt
European Patent Office
Office européen des brevets

(11) EP 2 748 269 B1

(12) EUROPEAN PATENT SPECIFICATION

(45) Date of publication and mention of the grant of the patent:
**28.10.2020 Bulletin 2020/44**

(21) Application number: **11752039.5**

(22) Date of filing: **23.08.2011**

(51) Int Cl.:
***C09J 7/00*** *(2018.01)*

(86) International application number:
**PCT/US2011/048839**

(87) International publication number:
**WO 2013/028179 (28.02.2013 Gazette 2013/09)**

# (54) PRESSURE SENSITIVE ADHESIVE LAMINATE FOR HIGH PERFORMANCE NOISE AND VIBRATION DAMPING APPLICATIONS

DRUCKEMPFINDLICHES ADHÄSIONSLAMINAT FÜR HOCHLEISTUNGSANWENDUNGEN ZUR GERÄUSCH- UND SCHWINGUNGSDÄMPFUNG

STRATIFIÉ ADHÉSIF AUTOCOLLANT POUR DES APPLICATIONS D'AMORTISSEMENT DU BRUIT ET DES VIBRATIONS DE GRANDE EFFICACITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2014 Bulletin 2014/27**

(73) Proprietor: **Avery Dennison Corporation**
**Glendale, CA 91203 (US)**

(72) Inventors:
- **PATHAK, Srikant**
  **Diamond Bar, CA 91765 (US)**
- **MALLYA, Prakash**
  **Sierra Madre, CA 91024 (US)**
- **HOLGUIN, Daniel L.**
  **Fullerton, CA 92835 (US)**
- **LI, Xing-Va**
  **San Gabriel, CA 91775 (US)**
- **SRIVATSAN, Nagarajan**
  **Pasadena, CA 91101 (US)**

(74) Representative: **Müller-Boré & Partner Patentanwälte PartG mbB**
**Friedenheimer Brücke 21**
**80639 München (DE)**

(56) References cited:
**EP-A1- 0 077 987**
**EP-A1- 0 542 201**
**US-A1- 2005 196 608**
**US-B2- 6 991 828**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 748 269 B1

## Description

### Field of Invention

The present invention relates to an adhesive composition that provides superior adhesive and damping properties when applied between two constraining layers and/or used in a vibration damping tape. The adhesive composition also provides excellent formability and reinforcement with good ageing characteristics.

### Background of the Invention

Vibration damping materials are widely used in industry to dampen the noise and vibration of mechanical systems such as automobiles, aircrafts and appliances such as washers, dryers and refrigerators. There are primarily two different approaches to achieve damping solutions: free layer damping (FLD) and constrained layer damping (CLD). Free layer damping involves applying a viscoelastic layer directly onto the surface or adherend to be damped. Constrained layer damping involves attaching the damping material between two stiff (high modulus of elasticity) materials such as metal plates. Generally speaking, constraining allows greater damping efficiency for a given thickness of the damping material and hence the CLD constructs tend to be thinner, lighter and more compact in comparison to FLD constructs for a given application. Many damping applications such as in floor or side panel sections of an auto body also have strong structural implications. In many such instances, free layer dampers cannot be conveniently employed. Constrained layer dampers where in the viscoelastic damping layer also has good physical and adhesive characteristics along with broad damping profile are useful in such applications.

There is an ever increasing demand for viscoelastic materials that allow good damping performance over a wide range of temperature for automotive, household goods and other applications. Free layer damping is not as efficient as constrained layer damping for a given material. There is also an ever increasing demand on structural properties of such dampers. For example, when the viscoelastic damping material is sandwiched between the two metal layers, the laminate is expected to have formability and spot-weldability similar to the original sheet metal to allow stamping and other part formation steps. The laminate is also expected to have thermal and ageing stability similar to the original metal since most applications will invariably require a high temperature (180-200 °C) paint-bake cycle. Furthermore, the laminate should have good damping behavior in the particular application of interest. For example, in automobile applications, the damping requirement for an engine oil pan is primarily at higher temperature, while that for undercarriage sheet metal is at about ambient temperature. Regardless of the damping range, both applications require excellent forming and reinforcing behavior.

Conventional constrained dampers, while focused on providing a good damping performance of their respective systems, generally fail to appreciate the simultaneous adhesive and physical properties required of a viscoelastic damping material to enable wide ranging damping applications.

### Summary of the Invention

In one aspect of the invention, there is provided a damped laminate that includes a first constraining layer; a second constraining layer; and a layer of an acrylic vibration damping composition between the first and second constraining layers according to claim 1.

In one embodiment, the acrylic backbone of the graft copolymer includes polymerized units of 2-ethyl hexyl acrylate, vinyl pyrrolidone and acrylic acid. In one embodiment, the terminal reactive group of the macromonomer includes an acrylate or methacrylate.

In one suitable embodiment, the hydrogen bonding functionality is chosen from carboxyl, amide, hydroxyl, amino, pyridyl, oxy and carbamoyl. In another suitable embodiment, the alkyl acrylate ester is chosen from n-butyl acrylate, 2-ethyl hexyl acrylate and isooctyl acrylate. In yet another embodiment, the alkyl acrylate ester comprises 2-ethyl hexyl acrylate.

In one embodiment, the acrylate backbone comprises polymerized units of 2-ethyl hexyl acrylate, vinyl pyrrolidone and acrylic acid. Suitably, the acrylic backbone comprises about 80 to about 85% by weight 2-ethyl hexyl acrylate; about 15 to about 20% by weight vinyl pyrrolidone; and about 0 to about 5% by weight acrylic acid, based on the total weight of the acrylic backbone. Optionally, the acrylate backbone further comprises a vinyl ester.

In one suitable embodiment, the acrylic damping composition further comprises a crosslinking agent. Optionally, the crosslinking agent comprises aluminum acetyl acetonate in an amount up to about 2% by weight of dry polymer.

In yet another embodiment, the acrylic damping composition further comprises at least one additive, wherein the additive is a pigment, a filler, a curing agent, a thickener, a wetting agent, a tackifier, a biocide, an adhesion promoter, a fire retardant, a defoamer, a colorant, a UV stabilizer, a conductive pigment or an antioxidant. In still a further embodiment, the at least one additive is a filler, said filler being a high surface area inorganic filler. Optionally, the high surface

area inorganic filler is carbon black, silica, mica, talc or kaolin.

The macromonomer has the general formula:

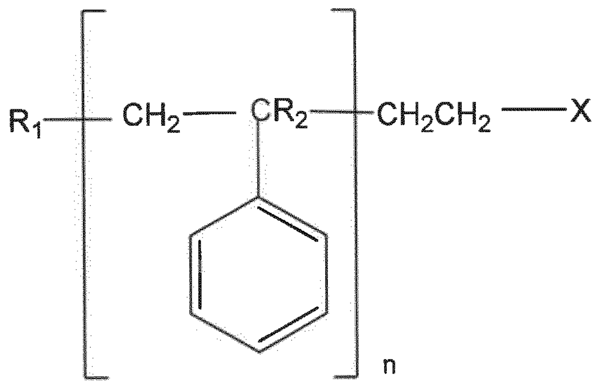

where $R_1$ is a radical that is a residue of a polymerization initiator, and $R_2$ is H or $CH_3$; X comprises a functional group selected from an acrylate, methacrylate, olefinic, allyl, hydroxyl, epoxy, carboxyl, isocyanate, and amine functional groups; and n=20 to 300.

In another embodiment, the composition is cured by application of heat, ultraviolet, infrared or electron beam radiation as a source of energy.

In one embodiment, the damped laminate has a minimum composite loss factor of 0.05 at a temperature range of about -10° to about 85°C and a resonance frequency of 500 Hz. In another embodiment, the damped laminate and/or vibration damping tape have a minimum composite loss factor of 0.05 at a temperature range of about 5° to about 125°C and a resonance frequency of 100 Hz. In yet another embodiment, the damped laminate and/or vibration damping tape have a minimum composite loss factor of 0.05 at a temperature range of about -10° to about 80°C and a resonance frequency of 1000 Hz. In still a further embodiment, the damped laminate and/or vibration damping tape have a minimum composite loss factor of 0.1 at a temperature range of about 5° to about 70°C and a resonance frequency of 500 Hz. In yet more one embodiment, the damped laminate and/or vibration damping tape have a minimum composite loss factor of 0.1 at a temperature range of about 10° to about 75°C and a resonance frequency of 100 Hz. In still another embodiment, the damped laminate and/or vibration damping tape have a minimum composite loss factor of 0.1 at a temperature range of about 0° to about 65°C and a resonance frequency of 1000 Hz.

In one embodiment, the vibration damping composition is a pressure sensitive adhesive having a dynamic shear strength of at least 2.5 $N/mm^2$.

In one embodiment, the terminal reactive group of the macromonomer includes an acrylate or methacrylate. In one embodiment, the vibration damping tape has a thickness in the range of about 1 mil (0.025 mm) to about 80 mils (2.0 mm), or in the range of about 1 mil (0.025 mm) to 25 mil (0.625 mm), or in the range of about 1 mil (0.025 mm) to about 4 mils (0.10 mm).

In one aspect of the invention, the acrylic damping composition is constrained between two steel plates to form a construction that has not only excellent damping properties (peak) in the range of 25-35 °C, but also has exceptional forming properties demonstrated by high dynamic shear, T-pull and high temperature dependent T-Pull. Furthermore, the damping composition when laminated between two steel sheets has excellent resistance weldability and other desirable metal forming properties. The damping composition additionally provides excellent heat ageing properties as demonstrated by the preservation of excellent physical and damping properties when the laminate is subjected to temperature as high as 190 °C for an hour.

## Detailed Description of the Invention

The present invention, in one embodiment, is directed to a damped laminate that includes a first constraining layer; a second constraining layer; and a layer of an acrylic viscoelastic vibration damping composition between the first and second constraining layers according to claim 1. The acrylic damping layer shows excellent physical properties along with good ambient temperature damping and is stable upon ageing at 180° to 200 °C.

The term "graft copolymers", as used herein, refers to macromolecules formed when polymer or copolymer chains are chemically attached as side chains to a polymeric backbone. Generally, the side chains are of a different polymeric composition than the backbone chain. Because graft copolymers often chemically combine unlike polymeric segments in one molecule, these copolymers have unique properties compared to the respective random analogues.

The term "comb copolymer", as used herein, refers to a type of graft copolymer, where the polymeric backbone

of the graft copolymer is linear, and each side chain of the graft copolymer is formed by a "macromonomer" that is grafted to the polymer backbone. The terms "macromonomers" and "macromers", as used herein, are low molecular weight polymers having at least one functional group at the end of the polymer chain that can further polymerize with others monomers to yield comb copolymers. See e.g., Kawakami in the "Encyclopedia of Polymer Science and Engineering", Vol. 9, pp. 195-204, John Wiley & Sons, New York, 1987. The term "linear", as used herein, is meant to include polymers where minor amounts of branching has occurred through hydrogen abstraction that is normally observed in free radical polymerizations. The comb copolymers are commonly prepared by the free radical copolymerization of macromonomer with conventional monomer (e.g., ethylenically unsaturated monomers).

In one embodiment, the invention is directed to "comb-type" graft copolymers comprising an acrylic backbone containing at least one interpolymerized alkyl acrylate ester containing from about 4 to about 8 carbon atoms in the alkyl group and having pendant therefrom side chains which individually have a molecular weight of from about 4,000 to about 25,000 g/mole, a glass transition greater than about 50 °C and providing crosslinkable moieties. The graft copolymers may be formed by polymerizing the alkyl acrylate monomer system to form the adhesive backbone in the presence of a crosslinkable high Tg reactive macromonomer, or by preforming the backbone and coupling the high Tg side chains to the backbone.

Graft polymerization can be carried out using solution, suspension or emulsion polymerization techniques. In one embodiment, the acrylic damping composition is made by copolymerizing an acrylate ester monomer system in the presence of at least one macromonomer in a suitable solvent such as ethyl acetate using free radical polymerization technique.

The main chain, or backbone, of the composition includes polymerized units of at least one ethylenically unsaturated monomer having a low Tg and at least one monomer capable hydrogen bonding (also referred to as polar monomer). Low Tg monomers generally refer to monomers having a Tg < 0°C. The monomers include acrylate esters containing 4 to 8 carbon atoms in the alkyl group. The acrylate esters include n-butyl acrylate, 2-ethyl hexyl acrylate, isooctyl acrylate.

The functional groups that have hydrogen-bonding capability are well known and include, carboxyl, amide, hydroxyl, amino, pyridyl, oxy and carbamoyl and mixtures thereof. In one embodiment, the acrylic polymer backbone includes the polar comonomers vinyl pyrrolidone and acrylic acid. Examples of other monomers with hydrogen-bonding functionality include methacrylic acid, vinyl alcohol, caprolactone, ethylene oxide, ethylene glycol, propylene glycol, 2-hydroxyethyl acrylate, N-vinyl caprolactam, acetoacetoxyethyl methacrylate etc.

In one embodiment, the acrylic ester monomer is polymerized in the presence of a vinyl ester such as vinyl acetate, vinyl butyrate, vinyl propionate, vinyl isobutyrate, vinyl valerate, vinyl versitate, and the like. The vinyl ester may be present in a total amount of up to about 35 weight percent, based on total weight of the monomers forming the acrylate main chain.

In one embodiment, the acrylic ester monomer is copolymerized with an unsaturated carboxylic acid in an amount up to 5.0% by weight, based on the total weight of the acrylic backbone polymer. The unsaturated carboxylic acids includes, among others, acrylic acid, methacrylic acid, itaconic acid, beta carboxy ethyl acrylate and the like.

In one embodiment, one of the co-monomers bears a functionality that can be further crosslinked. Examples of crosslink-able co-monomers will include (meth) acrylic acid, 2-hydroxyethyl acrylate, glycidyl methacrylate, itaconic acid, allyl glycidyl ether and the likes, and mixtures thereof. Functional moieties, such as those described above, can be used to crosslink the polymer chains, or to attach the high Tg side chains to the backbone or both.

In one embodiment, the acrylic main chain polymers includes a copolymer of 2-ethyl hexyl acrylate present in an amount of from about 85 percent to about 80 weight percent, polar hydrogen bonding co-monomers such as vinyl pyrrolidone and acrylic acid from about 15 to about 20 weight percent, of which acrylic acid present in an amount of up to 5 weight percent. In the grafted copolymer, in one embodiment, the total main chain acrylic co-monomers may be present in an amount from 75 to 90 weight percent, while the macromonomer side chains are present in an amount from about 10 to 25 weight percent, based on the total weight percent of the graft copolymer.

The term "high Tg macromonomers" refers to macromonomers having a Tg > 50 °C. The molecular weight of the macromonomer may be in the range of about 4, 000 to about 25,000 g/mole. In one embodiment, the molecular weight of the macromonomer is in the range of about 10,000 to about 15,000 g/mole.

The macromonomer is chosen from those having the general formula:

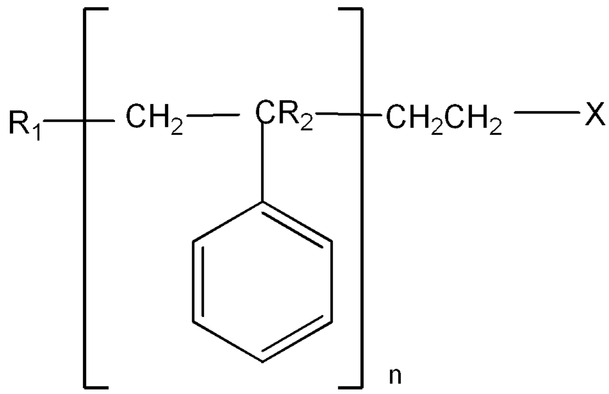

Where $R_1$ is a radical that is a residue of the polymerization initiator, for example

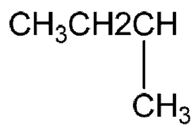

$R_2$ is H or $CH_3$; X comprises a functional group selected from an acrylate, methacrylate, olefinic, allyl, hydroxyl, epoxy, carboxyl, isocyanate, and amine functional groups; and n=20 to 300.

The macromonomer terminal end group capable of coupling with a suitable functional group on the backbone may be selected from one of the following terminal groups. The functional group of the backbone that is coupled with the selected terminal group may include one or more of those listed below.

| Terminal End Group | Functional Group on Backbone |
|---|---|
| Hydroxyl | Isocyanate, Melamine Formaldehyde, Anhydride, Epoxy, Titanium esters and Chelates |
| Carboxyl | Aziridines, Isocyanate, Melamine Formaldehyde, Anhydride, Epoxy, Carboiimides, Metal Chelates, Titanium esters and Oxazolines |
| Isocyanate | Self-reactive, Carboxylic acid, Amine, Hydroxyl |
| Vinyl | Addition reaction with Silicone hydride |
| (Meth) acryl ate | Amine, Mercaptan, Self-reactive with radical catalyst (UV, Thermal), Acetoacetate |
| Epoxy | Amine, Carboxylic acid, Phosphoric acid, Hydroxyl, Mercaptan |
| Amine | Isocyanate, Melamine formaldehyde, anhydride, epoxy, acetoacetate |
| Mercapto | Isocyanate, Melamine formaldehyde, Anhydride, Epoxy |
| Acetoacetate | Acrylate, Amine |

Examples of commercially available high Tg macromonomers include, for example, Macromonomer PS12 from Polymer Chemistry Innovations.

Graft polymerization can be carried out by solution, suspension or emulsion polymerization techniques. If necessary, it can also be carried out by polymerization of the monomers and the macromonomer in the presence of a photoinitiator by exposing the mixture to UV radiation (on web polymerization).

The acrylic polymer composition disclosed herein may further be subjected to crosslinking, which may be achieved through chemical means or energy/radiation curing. The choice of a chemical crosslinker depends on the chemical nature of the crosslinkable moiety introduced into the acrylic segment of the polymer. Exemplary chemical crosslinkers that may be employed include, but are not limited to, di-, tri- or poly- isocyanates (such as PAPI or Voronate) with or without a catalyst (such as dibutyltin dilaureate); ionic crosslinkers (such as Tyzor GBA, such as aluminum acetyl acetonate); and di-, tri- or poly- functional aziridines (such as Dynamar HX-752, XAMA, etc.). Illustrative, non-limiting examples of commercially available chemical crosslinkers include such as aluminum acetyl acetonate (AAA) available from NOAH Technologies of San Antonio, Tx, Tyzor available from DuPont of Wilmington, DE, XAMA available from Bayer of Pittsburgh, PA, and PAPI and Voronate, available from Dow Chemical. In one embodiment, the acrylic polymer

composition includes a crosslinking agent in an amount up to about 2% by weight of dry polymer.

Energy/radiation induced crosslinking presents a versatile and attractive alternative to the aforementioned chemical crosslinking processes, particularly in situations where the acrylic polymer composition is coated as a hot melt. Suitable energy/radiation includes application of ultraviolet light (UV) and high energy electrons (EB). When crosslinking using UV radiation, the graft polymer may be copolymerized with UV sensitive/reactive moieties. These moieties can be present to the in an amount of 0.1% to 10% by weight of the total monomer content. The acrylic polymer composition can contain multi-functional monomers such as hexanediol diacrylate, etc., to facilitate crosslinking. These multi-functional monomers may be present, for example, in an amount of 0% - 5% by weight of the composition.

When applying EB for crosslinking, the graft polymer can include, i.e. be copolymerized with, EB sensitive/reactive moieties. These moieties may be present in an amount of about 0.1% to about 10% by weight of the total monomer content. The acrylic polymer composition may contain multi-functional monomers such as hexanediol diacrylate, etc., to facilitate crosslinking. These multi-functional monomers may be present in an amount of about 0 to about 5 % by weight of the composition. The EB crosslinkable compositions may not be required to include either the copolymerized EB sensitive moiety or the multifunctional crosslinking agents.

The graft copolymer can be cured by application of heat, ultraviolet, infrared or electron beam radiation as an energy source.

In one embodiment, the acrylic polymer composition is blended with multiblock copolymers such as, styrene-isoprene-styrene (SIS), styrene-ethylenebutylene-styrene(SEBS) and the like in an amount of up to 30 % by dry weight of the polymer. Examples of useful triblocks are available from Kraton Polymer Inc., Houston, TX. Multiblock polymers are useful in modifying the damping peak and physical properties of the acrylic composition.

In one embodiment, the acrylic damping composition further includes one or more additives. Non-limiting examples of such additives include pigments, fillers, curing agents, thickeners, wetting agents, tackifiers, biocides, adhesion promoters, fire retardants, defoamers, colorants, UV stabilizers, conductive pigments and antioxidants.

In one embodiment, the acrylic damping composition includes a high surface area inorganic filler such as carbon black, silica (hydrophilic and hydrophobic modified), mica, talc, kaolin and the like. Such fillers are most effective when used in an amount of no more 15 % by weight of dry polymer. Examples of commercially available high surface area inorganic fillers include those available from Evonik Degussa GmbH (Germany). Inorganic fillers including the foregoing examples can be used to modulate the damping and physical properties of the acrylic composition.

In one embodiment, there is provided a damped laminate that includes a first constraining layer; a second constraining layer; and a layer of an acrylic vibration damping composition between the first and second constraining layers. The acrylic damping composition includes a graft according to claim 1.

In one embodiment, the damped laminate has a minimum composite loss factor of 0.1 at a temperature range of about 10° to about 75°C and a resonance frequency of 100 Hz. In another embodiment, the damped laminate has a minimum composite loss factor of 0.1 at a temperature range of about 15° to about 60°C and a resonance frequency of 100 Hz. In yet another embodiment, the damped laminate has a minimum composite loss factor of 0.1 at a temperature range of about 17° to about 55°C and a resonance frequency of 100 Hz.

At a resonance frequency of 500 Hz, the damped laminate, in one embodiment, has a minimum composite loss factor of 0.1 at a temperature range of about 5° to about 70°C. In another embodiment, the damped laminate has a minimum composite loss factor of 0.1 at a temperature range of about 7° to about 60°C and a resonance frequency of 500 Hz. In yet another embodiment, the damped laminate has a minimum composite loss factor of 0.1 at a temperature range of about 10° to about 55°C and a resonance frequency of 500 Hz.

At a resonance frequency of 1000Hz, in one embodiment the damped laminate has a minimum composite loss factor of 0.1 at a temperature range of about 0° to about 65°C. In another embodiment, the damped laminate has a minimum composite loss factor of 0.1 at a temperature range of about 5° to about 55°C and a resonance frequency of 1000 Hz. In yet another embodiment, the damped laminate has a minimum composite loss factor of 0.1 at a temperature range of about 7° to about 50°C and a resonance frequency of 1000 Hz.

In one embodiment, the damped laminate, has a minimum composite loss factor of 0.05 at a temperature range of about 5° to about 125°C and a resonance frequency of 100 Hz. In another embodiment, the damped laminate has a minimum composite loss factor of 0.05 at a temperature range of about 7° to about 120°C and a resonance frequency of 100 Hz. In yet another embodiment, the damped laminate has a minimum composite loss factor of 0.05 at a temperature range of about 15° to about 85°C and a resonance frequency of 100 Hz.

At a resonance frequency of 500 Hz, the damped laminate, in one embodiment, has a minimum composite loss factor of 0.05 at a temperature range of about -10° to about 85°C. In another embodiment, the damped laminate has a minimum composite loss factor of 0.05 at a temperature range of about -5° to about 75°C and a resonance frequency of 500 Hz. In yet another embodiment, the damped laminate has a minimum composite loss factor of 0.05 at a temperature range of about -3° to about 70°C and a resonance frequency of 500 Hz.

At a resonance frequency of 1000Hz, in one embodiment the damped laminate has a minimum composite loss factor of 0.05 at a temperature range of about -10° to about 80°C. In another embodiment, the damped laminate has a

minimum composite loss factor of 0.05 at a temperature range of about -7° to about 70°C and a resonance frequency of 1000 Hz. In yet another embodiment, the damped laminate has a minimum composite loss factor of 0.05 at a temperature range of about -5° to about 65°C and a resonance frequency of 1000 Hz.

The physical properties of the novel compositions were evaluated by standard pressure sensitive adhesive tape testing procedures as follows. Adhesive tests were evaluated using Instron 4301 model universal tester using 5 kN load cell (both available from Instron Inc., Norwood, MA).

### Laminate Sample Preparation

The substrate is prepared by coating the acrylic damping composition directly onto a steel plate of 12.7 cm (5 inch) by 12.7 cm (5 inch) dimension. The sample is then cured at 70°C for 10 min followed by cooling down to room temperature. The plate is then covered with PET liner (to prevent contamination) and cut into samples of 12.7 cm (5 inch) by 2.54 cm (1 inch) dimensions. A 2.54 cm (1 inch) by 2.54 cm (1 inch) area is marked on the back side of the panel. Two 12.7 cm (5 inch) by 2.54 (1 inch) panels: one coated with acrylic damping composition and the other without, were allowed to equilibrate for 5 minutes at 200°C in a forced air oven. Immediately thereafter, the panels were taken out of the oven followed by lamination using steel rollers set under 620 kN/$m^2$ (90 psi) of air pressure.

### Dynamic Shear Adhesion Test

The substrate for dynamic shear measurement is fabricated from the prepared laminate as follows. Using a tool to grip the laminate in the middle, the panels are pried open to yield an area of 2.54 cm (1 in.) by 2.54 cm (1 in.) in the middle of the laminate. The two non-parallel (opposite) ends are gripped into the jaws of an Instron apparatus and tested at a pull rate of 1.25 mm/min. The results are expressed in force divided by area of the sample (625 $mm^2$). The failure mode of the adhesive vis-à-vis coated/laminated face is also recorded.

### Dynamic T-Pull

The laminate sample is prepared as described previously, with the exception that a larger laminate area (40 mm by 125 mm) is used. The laminate is pried open at one end and each panel bent at right angle to provide a 40 mm by 25 mm grip area and 40 mm by 100 mm test area. The two ends are then put into the jaws of an Instron apparatus and tested at a pull rate of 100 mm/min. The force versus displacement curve is read in a way that the force is averaged over a linear displacement of at least 35 mm in the linear portion of the curve. The failure mode and originating surface (coated or laminated) face is also recorded.

### Static T-Pull

The sample preparation and dimensions are similar to as mentioned above in dynamic T-Pull section with the following exceptions. Once prepared, the laminate is pried open to provide a 45° angle followed by a grip area that is perpendicular to the laminate. While holding one end to a column a 500 g weight is attached to the other end. The whole setup is allowed to equilibrate in an oven at 160°C. After an hour of equilibration, the oven temperature is increased in 10°C increments and held for 30 minutes at each temperature step. The test is stopped at 230°C. The panel failure temperature and mode of failure are recorded for each sample.

### Heat Ageing Stability

Heat ageing stability of the samples are evaluated by performing each of the above tests i.e., dynamic shear, Dynamic/Static T-pull, for a laminate that was heated in an oven (in air) for 1 hr at 190°C.

### Vibration Beam Testing

The pressure sensitive adhesive is sandwiched between steel beams having the dimensions (25.4 cm (10 in) by 1.27 cm (0.5 in) by 1.65 mm (0.065 inch)). The constrained layer sandwich is evaluated for its damping properties at different temperatures and frequency ranges using instrument and analysis software provided by Damping Technologies Incorporated (Mishawaka, IN). A loss factor value of 0.05 or 0.1 is used as a threshold for determining the damping application temperature range for the adhesive.

**Materials and Abbreviations**

Unless otherwise indicated all materials are available from Sigma-Aldrich Corporation, St. Louis, MO.

| | |
|---|---|
| PS12 | Polystyrene Methacromer (Polymer Chemistry Incorporated, Tucson, AZ) |
| 2-EHA | 2-ethylhexyl acrylate |
| VP | N-vinyl pyrrolidone |
| AA | Acrylic acid |
| V-64 | 2, 2' azobis (2-methyl propanenitrile); CAS No. 78-67-1, DuPont (Wellington, DE) |
| Elvacite 1020 | Poly methyl methacrylate macromonomer supplied by Lucite International (Southampton, UK) |
| Irgonox 1010 | Antioxidant additive, Ciba Specialty Chemicals (Basel, Switzerland) |
| Ferrophos 2131 | Conductive Iron-Phosphorous Pigment, CAS No. 12751-22-3, Glenn Springs Holdings Inc. (Lexington, KY) |
| Steel | Electro galvanized steel manufactured by ThyssenKrupp AG (Germany) such as DC06 grade of nominal thickness of 0.8mm (0.03 in) |

**EXAMPLES**

**Polymer synthesis Examples A1 TO A3**

**Acrylic Polymer Composition A1-A3**

In a 350 ml pressure vessel (Chemglass Inc., Vineland, NJ) 10.2 g of PS12 was charged with 50 grams of ethyl acetate. The solution was stirred with a Teflon coated stir bar until all the solids disappeared. To this mixture, 41.6 grams of 2-EHA was added along with 7.5 grams of VP and 0.78 grams of AA. To this, a solution of V-64 (0.08 grams in 10 grams of ethyl acetate) was charged. An additional 20 grams of ethyl acetate was added to the vessel. A stream of nitrogen was bubbled through the solution for at least 10 minutes to eliminate dissolved oxygen. The bottle was then sealed and was kept in an oil bath at 70°C for at least 6 hrs while being mixed using a wrist-action rotary shaker. The reaction vessel was removed from the bath and allowed to cool before discharging the solution.

Examples A2 and A3: Synthesis of Examples A2 and A3 were substantially in accordance with that of Example A1, with the exception that the amounts of 2-EHA, VP and AA monomers were varied as shown in Table I below.

Table I

| | **A1** | **A2** | **A3** |
|---|---|---|---|
| PS 12 (wt %) | 17 | 17 | 17 |
| 2-EHA/VP/AA (Main Chain Monomer ratios) | **83.5/15/1.5** | **83/15/2** | **83/14/3** |
| | Weight, g | Weight, g | Weight, g |
| 2-EHA | 41.58 | 41.33 | 41.33 |
| VP | 7.54 | 7.47 | 6.97 |
| AA | 0.78 | 1.060 | 1.500 |
| V-64 | 0.08 | 0.08 | 0.08 |
| PS12 | 10.2 | 10.2 | 10.2 |
| EtAc | 80.00 | 80.00 | 80.00 |
| % Solids | 42.93 | 42.92 | 42.89 |

**Polymer synthesis Examples B1 TO B3**

**Acrylic Polymer Composition B1-B3**

Examples B1 to B3 were synthesized substantially in accordance with the procedure described above, with the exception that 14 wt % of PS12 was used. Table II below shows the monomer compositions of polymers B1 thru B3.

Table II

| | **B1** | **B2** | **B3** |
|---|---|---|---|
| PS 12 (wt %) | 14 | 14 | 14 |
| 2-EHA/VP/AA (Main Chain Monomer ratios) | **83.1/15/1.9** | **83/15/2** | **83/14/3** |
| | Weight, g | Weight, g | Weight, g |
| 2-EHA | 43.21 | 42.93 | 42.95 |
| VP | 7.79 | 7.74 | 7.28 |
| AA | 0.98 | 1.032 | 1.600 |
| V-64 | 0.08 | 0.08 | 0.08 |
| PS12 | 8.4 | 8.4 | 8.4 |
| EtAc | 80.00 | 80.00 | 80.00 |
| % Solids | 43.04 | 42.93 | 42.98 |

**Polymer synthesis Examples C1 TO C3**

**Comparative Acrylic Polymer Composition C1-C3**

Comparative Examples C1 thru C3 were synthesized in bottle reactors using the same general procedure as described above. These compositions had no macromonomers added to them. Table III shows the monomer compositions employed.

Table III

| | **C1** | **C2** | **C3** |
|---|---|---|---|
| 2-EHA/VP/AA | **83.5/15/1.5** | **83/15/2** | **83/14/3** |
| | Weight, g | Weight, g | Weight, g |
| 2-EHA | 50.1 | 49.8 | 49.8 |
| VP | 9 | 9 | 8.4 |
| AA | 0.9 | 1.2 | 1.8 |
| V-64 | 0.08 | 0.08 | 0.08 |
| EtAc | 75 | 75 | 75 |
| % Solids | 44.4 | 44.4 | 44.4 |

**Polymer synthesis Examples D1 AND D2**

**Acrylic Polymer Composition D1 and D2**

The Examples D1 and D2 were prepared substantially in accordance with the procedure of Example A1, with the exception that two macromonomers PS12 and Elvacite 1020 were used. Both macromonomers were dissolved in 50g of Ethyl Acetate followed by addition of 2-EHA, VP, AA and V-64 and remaining solvent. This was followed by bubbling Nitrogen gas through the solution for 10 mins. The solution was then allowed to polymerize for a minimum of 6 hrs at 70°C in an oil bath. Table IV shows the compositions employed to make these examples.

Table IV

| | D1 | D2 |
|---|---|---|
| PS 12 (wt %) | 11.9 | 5.1 |
| Elvacite 1020 (wt %) | 5.1 | 11.9 |
| 2-EHA/VP/AA (Main Chain Monomer ratios) | **83/15/2** | **83/15/2** |
| | Weight, g | Weight, g |
| 2-EHA | 41.45 | 41.33 |
| VP | 7.48 | 7.50 |
| AA | 1.11 | 1.08 |
| V-64 | 0.05 | 0.05 |
| PS12 | 6.63 | 3.57 |
| EtAc | 75 | 75 |
| % Solids | 44.6 | 44.6 |

**PSA Formulations and Coatings**

The acrylic polymer compositions as synthesized above were formulated with an antioxidant, conductive pigment and a crosslinker to yield an adhesive solution which can then be coated, cured and evaluated for physical properties and damping performance. The adhesive formulation embodiment is described as below in Table V.

Table V

| Adhesive Formulation | |
|---|---|
| Polymer (dry weight) | 100 |
| Irganox 1010 | 1.5 |
| Ferrophos 2131 | 33 |
| AAA | 0.78 |

A typical formulation for coating and testing is done at about a 20g scale. Typical base polymer will be in 40-45 % solid mixtures in ethyl acetate. Ferrophos 2131 and Irganox 1010 are added first followed by roll-mixing for 1 hr. Next, 0.5 wt % Aluminum (III) Acetylacetonate (AAA) (99.9% pure) from NOAH Technologies Corporation is added. Lastly, ethyl acetate or toluene is added to bring the formulation to 35% solid (based on initial polymer weight), and the formulation is placed on rollers for 1-2 hours until well-mixed for coating.

All of the coating for dynamic shear, static and dynamic T-pull testing are carried out on galvanized steel (DC06) of nominal thickness of 0.8 mm (0.3 inch). The steel sheet is cleaned with a wash of heptane, then one of MEK, then another of heptane, and allowed to dry. The steel sheet is then laid flat and coated with adhesive using a #150 Meyer Rod. The coating is dried at 70 °C for 10 minutes, and then protected with a sheet of Mylar release liner until it can be cut and laminated to another clean sheet of steel.

When samples are made for Vibration Beam Testing, only about 10 g of adhesive is needed, and the above formulation is modified accordingly. This is then coated on paper release liner using a bull nose drawdown set to give a 10 mil (0.25 mm) thickness of wet adhesive. This is dried as above, at 70°C for 10 minutes, and protected with a sheet of Mylar release liner. Typical coat weights are within the range of 90-110 grams per square meter (gsm).

**Physical and adhesive Properties**

**Damping Adhesive Examples 1 to 6**

Macromonomer containing polymers A1, A2 and A3 were formulated with 17 wt % of PS 12 macromonomer, conductive pigment, crosslinker and antioxidant to yield damping adhesive formulations A1-F, A2-F and A3-F respectively.

The formulations were coated on to galvanized steel and tested for adhesive performance. Table VI shows the adhesive performance of the above samples. The results indicate an average of at least two readings.

Table VI

| Example | Formulation ID | Dynamic Shear ($N/mm^2$) | Failure Mode | Dynamic T-Pull (N/mm) | Static T-Pull (°C) |
|---|---|---|---|---|---|
| 1 | A1-F | 2.8 | adh. | 2.1 | 230 |
| 2 | A1-F-aged | 3.0 | 75% coh. | 2.5 | 230 |
| 3 | A2-F | 2.9 | adh. | 2.2 | 230 |
| 4 | A2-F-aged | 3.1 | 75% coh. | 2.5 | 230 |
| 5 | A3-F | 2.5 | adh. | 1.7 | 230 |
| 6 | A3-F-aged | 3.0 | 50% coh. | 2.5 | 230 |

**Damping Adhesive Examples 7 to 12**

The acrylic polymer compositions of Examples B1, B2 and B3 containing 14 wt % of PS12 macromonomer with various main chain monomer compositions were formulated, coated and tested as described previously. Table VII shows the performance of these formulations (B1-F, B2-F and B3-F) under various adhesive and physical tests. The results indicate an average of at least two readings.

Table VII

| Example | Formulation ID | Dynamic Shear ($N/mm^2$) | Failure Mode | Dynamic T-Pull (N/mm) | Static T-Pull (°C) |
|---|---|---|---|---|---|
| 7 | B1-F | 1.4 | 20% coh. | 1.5 | 230 |
| 8 | B1-F-aged | 1.3 | 25% coh. | 1.9 | 230 |
| 9 | B2-F | 1.3 | 20% coh. | 0.7 | 230 |
| 10 | B2-F-aged | 1.5 | 10% coh. | 1.4 | 230 |
| 11 | B3-F | 1.8 | 10% coh. | 1.8 | 230 |
| 12 | B3-F-aged | 2.4 | 20% coh. | 1.9 | 230 |

**Comparative Examples 13-18**

The acrylic polymer compositions of Comparative Examples C1, C2 and C3 containing no macromonomer were formulated with antioxidant, conductive pigment and crosslinker followed by coating and panel preparation as described in detail previously. Table VIII shows the results of the various physical tests performed with these polymers.

Table VIII

| Comparative Example | Formulation ID | Dynamic Shear ($N/mm^2$) | Failure Mode | Dynamic T-Pull (N/mm) | Static T-Pull (°C) |
|---|---|---|---|---|---|
| 13 | C1-F | 2.2 | 50% coh. | 1.6 | 230 |
| 14 | C1-F-aged | 2.0 | 50% coh. | 1.8 | 230 |
| 15 | C2-F | 2.0 | 50% coh. | 1.7 | 230 |
| 16 | C2-F-aged | 2.2 | 50% coh. | 1.9 | 230 |
| 17 | C3-F | 2.2 | 50% coh. | 1.8 | 210 |
| 18 | C3-F-aged | 0.7 | cohesive | 2.3 | 220 |

**Damping Adhesive Examples 19 to 22**

The acrylic polymer compositions D1 and D2 containing mixed macromonomer polymers were formulated with

antioxidant, crosslinker and conductive pigments to yield formulations D1-F and D2-F, respectively. Table IX shows the result of adhesive performance tests on laminates prepared from these polymers.

Table IX

| Example | Formulation ID | Dynamic Shear ($N/mm^2$) | Failure Mode | Dynamic T-Pull (N/mm) | Static T-Pull (°C) |
|---|---|---|---|---|---|
| 19 | D1-F | 3.6 | 10% coh. | 2.4 | 230 |
| 20 | D1-F-aged | 4.2 | cohesive | 3.1 | 230 |
| 21 | D2-F | 3.5 | 10% coh. | 2.2 | 230 |
| 22 | D2-F-aged | 5.1 | cohesive | 3.3 | 230 |

**Comparative Examples 23 to 26**

As a comparison, two commercially available 2 mil (0.05 mm) transfer tapes from 3M Company (St Paul, MN) were tested for adhesive and physical properties as outlined previously. In particular 3M VHB F9460PC and 467 MP transfer tapes were used. The sample preparation was identical to other solution polymer based formulations except for the fact that it started with transfer lamination onto galvanized steel surface.

Table X

| Comparative Example | Formulation ID | Dynamic Shear ($N/mm^2$) | Failure Mode | Dynamic T-Pull (N/mm) | Static T-Pull (°C) |
|---|---|---|---|---|---|
| 23 | VHB F94600PC | 1.9 | 25% coh. | 2.4 | -- |
| 24 | VHB F94600PC-aged | 0.4 | cohesive | 0.5 | -- |
| 25 | 467 MP | 2.4 | 50% coh. | 2.6 | -- |
| 26 | 467 MP-aged | 0.3 | cohesive | 0.3 | -- |

**Damping Characteristics**

The damping temperature range of the samples was obtained in constrained layer geometry as described previously. Two different parameters were applied to represent the data: (a) composite material loss factor (LF) > 0.1 and (b) LF > 0.05. Table XI illustrates the damping profile for many of the polymer samples as well as the comparative examples as provided herein.

Example XI

| | Damping Temperature Range and Peak when LF > 0.1 | | | Damping Range when LF > 0.05 | | |
|---|---|---|---|---|---|---|
| | 1000 Hz | 500 Hz | 100 Hz | 1000 Hz | 500 Hz | 100 Hz |
| Example | Temperature Range (Peak), °C | | | Temperature Range, °C | | |
| 1 (A1-F) | 3 to 50 (26) | 5 to 55 (28) | 14 to 70 (32) | -6 to 63 | -3 to 74 | 5 to 123 |
| 3 (A2-F) | 5 to 51 (26) | 6 to 56 (28) | 17 to 53 (32) | -5 to 66 | -3 to 75 | 6 to 81 |
| 5 (A3-F) | 6 to 60 (34) | 10 to 65 (35) | 26 to 56 (39) | -4 to 75 | 8 to 83 | 12 to 86 |
| 7 (B1-F) | -5 to 37 (15) | -3 to 41 (17) | 5 to 40 (19) | -12 to 48 | -10 to 54 | -5 to 55 |
| 9 (B2-F) | 4 to 51 (25) | 6 to 54 (26) | 15 to 52 (32) | -5 to 65 | -2 to 74 | 6 to 85 |
| 11 (B3-F) | 9 to 59 (34) | 11 to 63 (35) | 19 to 65 (37) | 0 to 73 | 3 to 82 | 8 to 112 |
| Comp. 13 (C1-F) | -5 to 39 (15) | -3 to 43 (17) | 5 to 55 (21) | -12 to 50 | -10 to 58 | -5 to 105 |
| Comp. 15 (C2-F) | -6 to 34 (12) | -5 to 39 (14) | 3 to 48 (19) | -14 to 46 | -12 to 56 | -5 to 74 |
| Comp. 17 (C3-F) | -5 to 37 (14) | -1 to 41 (17) | 6 to 55 (23) | -12 to 49 | -9 to 60 | -- |

(continued)

| | Damping Temperature Range and Peak when LF > 0.1 | | | Damping Range when LF > 0.05 | | |
|---|---|---|---|---|---|---|
| | 1000 Hz | 500 Hz | 100 Hz | 1000 Hz | 500 Hz | 100 Hz |
| 19 (D1-F) | 5 to 48 (26) | 6 to 53 (27) | 12 to 77 (31) | -5 to 60 | -3 to 68 | 4 to 120 |
| 21 (D2-F) | 6 to 56 (28) | 9 to 61 (34) | 17 to64 (36) | -5 to 69 | 0 to 76 | 8 to 117 |
| Comp. Ex. 23 | 1 to 50 (25) | 3 to 55 (26) | 12 to 70 (32) | -8 to 65 | -6 to 74 | -- |
| Comp. Ex. 25 | 0 to 51 (25) | 2 to 56 (27) | 12 to 54 (30) | -8 to 65 | -5 to 72 | 2 to 76 |

In general, design guidelines for pressure sensitive adhesives having good damping and physical properties could be related to the glass transition temperature (Tg), as follows:

(a) Dynamic Shear properties $\propto$ Tg

(b) T-Pull $\propto \frac{1}{Tg}$

(c) Damping (Peak) $\propto$ Tg

In other words, increasing the glass transition of a co-polymeric system will increase the damping temperature (peak) and the shear behavior but will adversely affect the T-pull tests. For a room temperature damping materials in general, these competing demands are difficult to balance.

During the course of experimentation, we surprisingly discovered that in a co-polymeric pressure sensitive adhesive composition using a macromonomer in certain ratios allows us to break this paradigm of Tg dependence. This discovery enables us to produce polymers that provide simultaneously excellent dynamic shear, T-Pull and good room temperature damping performance. The foregoing examples illustrated the invention.

Comparative Examples 13 to 18, which are based on polymers having no macromonomer, illustrate the difficulty in balancing the desired properties. Specifically, while Examples 13 to 16 show good shear and T-pull characteristics, the damping peak at 500 Hz (LF > 0.1) for Examples 13, 15 and 17 is well below room temperature. Increasing the Tg by changing the polymer composition (see Example 17) does little to increase the damping temperature, but adversely affects the static T-pull behavior and dynamic measurement upon ageing (Table VIII).

The acrylic damping compositions of Examples 7 to 12 illustrate the effect of macromonomer addition (at 14 wt%). Specifically, the acrylic damping compositions of Examples 7, 9 and 11 show good physical characteristics and well modulated damping (500 Hz, LF > 0.1, Table XI) at room temperature which is tunable by changing the Tg of the main chain.

The embodiments exemplified by Examples 1 to 6, which contain macromonomer at 17 wt % concentration, show excellent initial dynamic shear, T-Pull and static T-Pull. The polymers not only show excellent physical properties upon ageing, but both dynamic shear and T-Pull values go up with ageing, which is a very desirable attribute for long term stability. In addition to having excellent physical properties, these polymers show excellent room temperature damping performance. See for example the damping peak & temperature range LF> 0.1, 500 Hz (Table XI). Furthermore, these polymers (Examples 1, 3 and 5 of Table XI) also allow a well controlled modulation of damping peak while preserving the superior adhesive and physical properties.

Comparative Examples 23 to 26 show two commercially available tapes: one marketed for damping applications (Ex. 23) and the other for high temperature applications (Ex. 25). While these samples exhibited good damping characteristics and initial dynamic shear and T-Pull, the adhesive properties were significantly compromised upon ageing. These examples further illustrate the difficulty of combining good damping behavior with good physical & adhesive properties.

In the embodiment exemplified by Examples 19 to 22, two different macromonomers were combined in a ratio of 70/30 (Examples 19, 20 of Table IX) and 30/70 (Examples 21, 22 of Table IX). The main chain composition in both the cases was maintained at 2-EHA/VP/AA (83/15/2). These polymers show exceptional initial and aged dynamic shear and T-Pull values. Both samples show excellent room temperature damping behavior, with the acrylic damping composition of Example 21 having a damping peak shifted to slightly higher temperature.

The above embodiments and examples illustrate the advantageous use of macromonomers to create phase-separated systems that yield excellent physical properties and room temperature damping behavior.

## Claims

1. A damped laminate comprising:

   a first constraining layer;
   a second constraining layer; and
   a layer of an acrylic vibration damping composition between the first and second constraining layers, the acrylic damping composition comprising a graft copolymer comprising:

   75% to 90% by weight of an acrylic backbone comprising polymerized units of an alkyl acrylate ester having 4 to 8 carbon atoms in the alkyl group and having a Tg less than 0°C and at least one monomer having hydrogen bonding functionality; and
   10% to 25% by weight of side chains pendant from the acrylic backbone, the side chains comprising a macromonomer comprising a terminal reactive group that is capable of free radical copolymerization or a terminal end group capable of coupling with a suitable functional group on the backbone, wherein the macromonomer has a number average molecular weight from 4,000 to 25,000 g/mole and a Tg of 50°C or greater,

   wherein the alkyl acrylate ester is chosen from n-butyl acrylate, 2-ethyl hexyl acrylate and isooctyl acrylate, and wherein the macromonomer has the general formula:

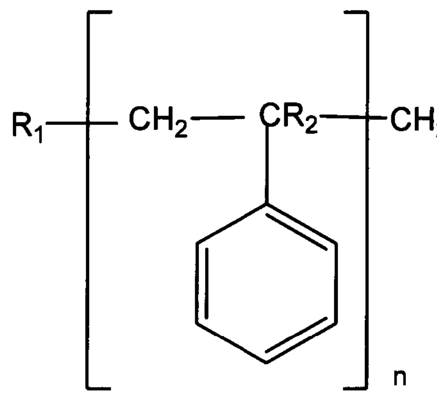

   where $R_1$ is a radical that is a residue of a polymerization initiator, and $R_2$ is H or $CH_3$; X comprises a functional group selected from an acrylate, methacrylate, olefinic, allyl, hydroxyl, epoxy, carboxyl, isocyanate, and amine functional groups; and

2. The damped laminate of claim 1, wherein the hydrogen bonding functionality is chosen from carboxyl, amide, hydroxyl, amino, pyridyl, oxy and carbamoyl.

3. The damped laminate according to any one of the preceding claims, wherein the alkyl acrylate ester is 2-ethyl hexyl acrylate.

4. The damped laminate according to any one of the preceding claims, wherein the acrylate backbone comprises polymerized units of 2-ethyl hexyl acrylate, vinyl pyrrolidone and acrylic acid, preferably wherein the acrylate backbone further comprises a vinyl ester.

5. The damped laminate according to any one of the preceding claims, wherein the acrylic damping composition further comprises a crosslinking agent, preferably wherein the crosslinking agent comprises aluminum acetyl acetonate in an amount up to 2% by weight of dry polymer.

6. The damped laminate according to any one of the preceding claims, wherein the acrylic damping composition further comprises at least one additive, wherein the additive is a pigment, a filler, a curing agent, a thickener, a wetting agent, a tackifier, a biocide, an adhesion promoter, a fire retardant, a defoamer, a colorant, a UV stabilizer, a conductive pigment or an antioxidant, preferably wherein the at least one additive is a filler, said filler being a high surface area inorganic filler, preferably wherein the high surface area inorganic filler is carbon black, silica, mica,

talc or kaolin.

7. The damped laminate according to any one of the preceding claims, wherein the acrylic backbone comprises 80 to 85% by weight 2-ethyl hexyl acrylate; 15 to 20% by weight vinyl pyrrolidone; and 0 to 5% by weight acrylic acid, based on the total weight of the acrylic backbone.

8. The damped laminate according to any one of the preceding claims, wherein the composition is cured by application of heat, ultraviolet, infrared or electron beam radiation as a source of energy.

9. The damped laminate according to any one of the preceding claims, having a minimum composite loss factor of 0.05 at a temperature range of about -10° to about 85°C and a resonance frequency of 500 Hz, or at a temperature range of about 5° to about 125°C and a resonance frequency of 100 Hz, or at a temperature range of about -10° to about 80°C and a resonance frequency of 1000 Hz.

10. The damped laminate according to any one of claims 1-8, having a minimum composite loss factor of 0.1 at a temperature range of about 5° to about 70°C and a resonance frequency of 500 Hz, or at a temperature range of about 10° to about 75°C and a resonance frequency of 100 Hz, or at a temperature range of about 0° to about 65°C and a resonance frequency of 1000 Hz.

11. The damped laminate according to any one of the preceding claims, wherein the acrylic vibration damping composition comprises a pressure sensitive adhesive having a dynamic shear strength of at least 2.5 N/$mm^2$.

## Patentansprüche

1. Dämpfendes Laminat, umfassend:

   eine erste einschränkende Schicht;
   eine zweite einschränkende Schicht; und
   eine Schicht aus einer schwingungsdämpfenden Acrylzusammensetzung zwischen der ersten und zweiten einschränkenden Schicht, wobei die dämpfende Acrylzusammensetzung ein Pfropfcopolymer umfasst, umfassend:

   75 Gewichts-% bis 90 Gewichts-% einer Acryl-Hauptkette, die polymerisierte Einheiten eines Alkylacrylatesters mit 4 bis 8 Kohlenstoffatomen in der Alkylgruppe und mit einer Tg von weniger als 0°C, und mindestens ein Monomer mit Wasserstoff-Bindungsfunktionalität umfasst; und
   10 Gewichts-% bis 25 Gewichts-% von Seitenketten, die an der Acryl-Hauptkette hängen, wobei die Seitenketten ein Macromonomer umfassen, welches eine endständige reaktive Gruppe, die zur freien radikalischen Copolymerisation fähig ist, oder eine endständige reaktive Gruppe, die dazu fähig ist, mit einer geeigneten funktionellen Gruppe in der Hauptkette zu koppeln, umfasst, wobei das Macromonomer ein zahlengemitteltes Molekulargewicht von 4000 bis 25000 g/Mol und eine Tg von 50 °C oder mehr aufweist, wobei der Alkylacrylatester aus *n*-Butylacrylat, 2-Ethylhexylacrylat und *iso*Octylacrylat ausgewählt ist, und wobei das Macromonomer die allgemeine Formel aufweist:

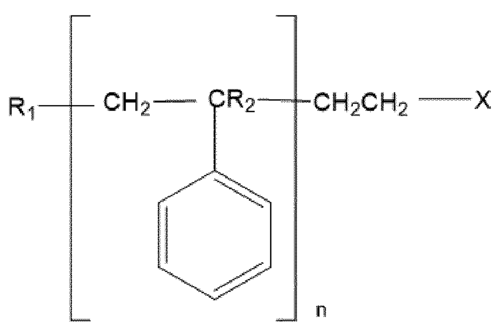

   wobei $R_1$ ein Radikal ist, das ein Rest eines Polymerisationsinitiators ist, und $R_2$ H oder $CH_3$ ist; X eine funktionelle Gruppe umfasst, ausgewählt aus einem Acrylat, Methacrylat, olefinisch, Allyl, Hydroxyl, Epoxy,

Carboxyl, Isocyanat und Amin funktionalisierten Gruppen; und wobei n=20 bis 300.

2. Dämpfendes Laminat nach Anspruch 1, wobei die Wasserstoff-Bindungsfunktionalität aus Carboxyl, Amid, Hydroxyl, Amino, Pyridyl, Oxy und Carbamoyl ausgewählt ist.

3. Dämpfendes Laminat nach einem der vorhergehenden Ansprüche, wobei der Alkylacrylatester 2-Ethylhexylacrylat ist.

4. Dämpfendes Laminat nach einem der vorhergehenden Ansprüche, wobei die Acrylat-Hauptkette polymerisierte Einheiten von 2-Ethylhexylacrylat, Vinylpyrrolidon und Acrylsäure umfasst, bevorzugt wobei die Acrylat-Hauptkette weiter einen Vinylester umfasst.

5. Dämpfendes Laminat nach einem der vorhergehenden Ansprüche, wobei die dämpfende Acrylzusammensetzung weiter ein Vernetzungsmittel umfasst, bevorzugt wobei das Vernetzungsmittel Aluminiumacetylacetonat in einer Menge von bis zu 2 Gewichts-% des trockenen Polymers umfasst.

6. Dämpfendes Laminat nach einem der vorhergehenden Ansprüche, wobei die dämpfende Acrylzusammensetzung weiter mindestens ein Additiv umfasst, wobei das Additiv ein Pigment, ein Füllstoff, ein Härtungsmittel, ein Verdickungsmittel, ein Benetzungsmittel, ein klebrigmachendes Mittel, ein Biozid, ein Haftvermittler, ein flammhemmendes Mittel, ein Entschäumungsmittel, ein Farbstoff, ein UV-Stabilisator, ein leitfähiges Pigment oder ein Antioxidant ist, bevorzugt wobei das mindestens eine Additiv ein Füllstoff ist, wobei der besagte Füllstoff ein anorganischer Füllstoff mit einer großen Oberfläche ist, bevorzugt wobei der anorganische Füllstoff mit einer großen Oberfläche Industrieruß, Siliciumdioxid, Glimmerschiefer, Talk oder Kaolin ist.

7. Dämpfendes Laminat nach einem der vorhergehenden Ansprüche, wobei die Acrylat-Hauptkette 80 bis 85 Gewichts-% 2-Ethylhexylacrylat; 15 bis 20 Gewichts-% Vinylpyrrolidon; und 0 bis 5 Gewichts-% Acrylsäure, im Bezug auf das Gesamtgewicht der Acrylat-Hauptkette, umfasst.

8. Dämpfendes Laminat nach einem der vorhergehenden Ansprüche, wobei die Zusammensetzung durch die Anwendung von Hitze, Ultraviolett-, Infrarot- oder Elektronenstrahlung als Energiequelle gehärtet wird.

9. Dämpfendes Laminat nach einem der vorhergehenden Ansprüche, das einen minimalen Betriebsdämpfungsfaktor von 0,05 in einem Temperaturbereich von etwa -10° bis etwa 85 °C und einer Resonanzfrequenz von 500 Hz, oder in einem Temperaturbereich von etwa 5° bis etwa 125°C und einer Resonanzfrequenz von 100 Hz, oder in einem Temperaturbereich von etwa -10° bis etwa 80 °C und einer Resonanzfrequenz von 1000 Hz aufweist.

10. Dämpfendes Laminat nach einem der Ansprüche 1-8, das einen minimalen Betriebsdämpfungsfaktor von 0,1 in einem Temperaturbereich von etwa 5° bis etwa 70 °C und einer Resonanzfrequenz von 500 Hz, oder in einem Temperaturbereich von etwa 10° bis etwa 75 °C und einer Resonanzfrequenz von 100 Hz, oder in einem Temperaturbereich von etwa 0° bis etwa 65 °C und einer Resonanzfrequenz von 1000 Hz aufweist.

11. Dämpfendes Laminat nach einem der vorhergehenden Ansprüche, wobei die schwingungsdämpfende Acrylzusammensetzung einen druckempfindlichen Klebstoff mit einer dynamischen Scherfestigkeit von mindestens 2,5 $N/mm^2$ umfasst.

## Revendications

1. Stratifié amorti comprenant :

une première couche de contrainte ;
une deuxième couche de contrainte ; et
une couche d'une composition acrylique amortissant les vibrations entre la première et la deuxième couche de contrainte, la composition acrylique amortissante comprenant un copolymère greffé comprenant :

75% à 90% en poids d'un squelette acrylique comprenant des unités polymérisées d'un ester acrylate d'alkyle ayant de 4 à 8 atomes de carbone dans le groupe alkyle et ayant une Tv inférieure à 0°C et au moins un monomère ayant une fonctionnalité permettant une liaison hydrogène ; et

10% à 25% en poids de chaines latérales sur le squelette acrylique, les chaines latérales comprenant un macromonomère comprenant un groupe réactif terminal, qui est capable de copolymérisation par radicaux libres ou un groupe terminal capable de couplage avec un groupe fonctionnel approprié sur le squelette, dans lequel le macromonomère a un poids moléculaire moyen en nombre allant de 4000 à 25 000 g/mole et une Tv de 50°C ou plus,
dans lequel l'ester acrylate d'alkyle est choisi parmi l'acrylate de n-butyle, l'acrylate de 2-éthylhexyle et l'acrylate d'isooctyle, et dans lequel le macromonomère a la formule générale :

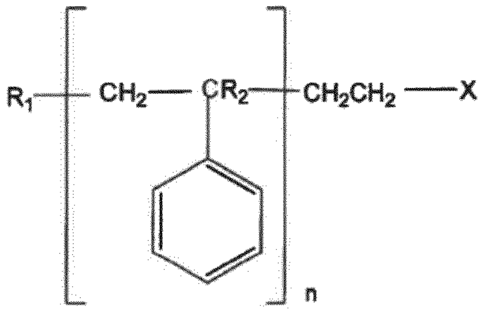

dans lequel $R_1$ est un radical qui est un résidu d'un initiateur de polymérisation, et $R_2$ est H ou $CH_3$ ; X comprend un groupe fonctionnel choisi parmi les groupes fonctionnels acrylate, méthacrylate, oléfinique, allyle, hydroxyle, époxy, carboxyle, isocyanate et aminé ; et n = 20 à 300.

2. Stratifié amorti selon la revendication 1, dans lequel la fonctionnalité permettant une liaison hydrogène est choisi parmi carboxyle, amide, hydroxyle, amino, pyridyle, oxy et carbamoyle.

3. Stratifié amorti selon l'une quelconque des revendications précédentes, dans lequel l'ester acrylate d'alkyle est l'acrylate de 2-éthylhexyle.

4. Stratifié amorti selon l'une quelconque des revendications précédentes, dans lequel le squelette acrylate comprend des unités polymérisées d'acrylate de 2-éthylhexyle, de vinylpyrrolidone et d'acide acrylique, de préférence dans lequel le squelette acrylate comprend en outre, un éther vinylique.

5. Stratifié amorti selon l'une quelconque des revendications précédentes, dans lequel la composition acrylique amortissante comprend en outre, un agent de réticulation, de préférence dans lequel l'agent de réticulation comprend un acétylacétonate d'aluminium en une quantité de jusqu'à 2% en poids de polymère sec.

6. Stratifié amorti selon l'une quelconque des revendications précédentes, dans lequel la composition acrylique amortissante comprend en outre, au moins un additif, dans lequel l'additif est un pigment, une charge, un agent de réticulation, un épaississant, un agent mouillant, un tackifiant, un biocide, un promoteur de l'adhésion, un retardateur de feu, un antimousse, un colorant, un stabilisant des UV, un pigment conducteur ou un antioxydant, de préférence dans lequel l'au moins un additif est une charge, ladite charge étant une charge inorganique à haute superficie, de préférence la charge inorganique à haute superficie est le noir de carbone, la silice, le mica, le talc ou le kaolin.

7. Stratifié amorti selon l'une quelconque des revendications précédentes, dans lequel le squelette acrylique comprend 80 à 85% en poids d'acrylate de 2-éthylhexyle ; 15 à 20% en poids de vinylpyrrolidone ; et 0 à 5% en poids d'acide acrylique, sur base du poids total du squelette acrylique.

8. Stratifié amorti selon l'une quelconque des revendications précédentes, dans lequel la composition est réticulée par application de chaleur, d'ultraviolet, d'infrarouge ou d'un rayonnement électronique comme source d'énergie.

9. Stratifié amorti selon l'une quelconque des revendications précédentes, ayant un facteur minimal de perte composite de 0,05 à une plage de températures d'environ -10° à environ 85°C et une fréquence de résonnance de 500 Hz, ou à une plage de températures d'environ 5° à environ 125°C et une fréquence de résonnance de 100 Hz, ou à une plage de températures d'environ -10° à environ 80°C et une fréquence de résonnance de 1000 Hz.

10. Stratifié amorti selon l'une quelconque des revendications 1 à 8, ayant un facteur minimal de perte composite de 0,1 à une plage de températures d'environ 5° à environ 70°C et une fréquence de résonnance de 500 Hz, ou à une

plage de températures d'environ 10° à environ 75°C et une fréquence de résonnance de 100 Hz, ou à une plage de températures d'environ 0° à environ 65°C et une fréquence de résonnance de 1000 Hz.

**11.** Stratifié amorti selon l'une quelconque des revendications précédentes, dans lequel la composition acrylique amortissant les vibrations comprend un adhésif autocollant ayant une résistance au cisaillement dynamique d'au moins 2,5 $N/mm^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **KAWAKAMI.** Encyclopedia of Polymer Science and Engineering. John Wiley & Sons, 1987, vol. 9, 195-204
- *CHEMICAL ABSTRACTS,* 78-67-1
- *CHEMICAL ABSTRACTS,* 12751-22-3